(19) Europäisches Patentamt
European Patent Office
Office européen des brevets

(11) **EP 1 956 362 A1**

(12) **EUROPEAN PATENT APPLICATION**
published in accordance with Art. 158(3) EPC

(43) Date of publication:
**13.08.2008 Bulletin 2008/33**

(51) Int Cl.:
***G01N 21/35*** (2006.01)  ***F26B 5/06*** (2006.01)
***F26B 25/00*** (2006.01)

(21) Application number: **06833502.5**

(22) Date of filing: **28.11.2006**

(86) International application number:
**PCT/JP2006/323698**

(87) International publication number:
**WO 2007/063840 (07.06.2007 Gazette 2007/23)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **30.11.2005 JP 2005347167**

(71) Applicant: **Eisai R&D Management Co., Ltd.
Tokyo 112-8088 (JP)**

(72) Inventor: **TAKEUCHI, Tomohiko
Tsukuba-shi, Ibaraki 300-2635 (JP)**

(74) Representative: **HOFFMANN EITLE
Patent- und Rechtsanwälte
Arabellastrasse 4
81925 München (DE)**

(54) **METHOD OF MEASURING MOISTURE CONTENT OF DRYING SUBJECT**

(57) The present invention provides a method of measuring moisture content of an object for drying during drying in a drying chamber by, for example, freeze-drying, fluidized bed drying or shelf drying, in real-time and in a non-destructive manner. According to the present invention, when measuring moisture content of an object for drying, a near infrared absorption spectrum of moisture present around the object for drying is measured, and the moisture content of the object for drying is calculated from a predetermined relationship based on a measured amount obtained from the measured near infrared absorption spectrum.

**FIG.1**

EP 1 956 362 A1

Printed by Jouve, 75001 PARIS (FR)

**Description**

Technical field

The present invention relates to a method of measuring moisture content of an object for drying during drying using near infrared spectroscopy, and a process for producing a dried product obtained using this method.

Background Art

There are many cases in which production processes of pharmaceutical preparations, foods and the like normally contain a step in which a product being produced is dried (drying step). In this drying step, drying is typically carried out until moisture content (an amount of water contained) of an object for drying falls within a predetermined range of specification from a viewpoint of quality control and the like, and various methods are known for measuring moisture content of an object for drying.

For example, a method of measuring temperature of an object for drying during drying (product temperature) is frequently used to measure moisture content of an object for drying in freeze-drying steps, fluidized bed drying steps, and tray drying step, which are frequently used to dry pharmaceutical preparations (product temperature measurement method). Although product temperature of an object for drying is maintained nearly constant since moisture that evaporates removes heat of vaporization during the time moisture is evaporating from the object for drying (during drying), when there is no longer any moisture to vaporize and the heat of vaporization is longer removed (when drying is completed), product temperature begins to rise, and this method uses this principle to detect the endpoint of drying.

In addition, methods described in Patent Documents 1 and 2 are known as methods for real-time measurement of moisture content of an object for drying using near infrared spectroscopy. These methods allow real-time measurement of the moisture content of an object for drying, such as tea leaves or sludge when drying tea leaves or sludge in a drying apparatus, by direct analysis using near infrared rays, and measure the moisture content of the object for drying according to the degree of near infrared rays absorbed by the object for drying when the object for drying is irradiated with near infrared rays.

Patent Document 1: Japanese Patent Application Laid-open No. H10-311792
Patent Document 2: Japanese Patent Application Laid-open No. H11-326195

Disclosure of Invention

Problems to be Solved by the Invention

However, in the methods for measuring product temperature as described above, assessment of drying endpoint is nearly completely dependent on empirical rules. In other words, since the change in temperature of an object for drying just before completion of drying is small, it is difficult to quantitatively determine the moisture content of the object for drying while drying is in progress. Thus, methods for assessing drying endpoint according to a product temperature measurement method only serve as an indicator of the endpoint.

In addition, methods using near infrared rays as disclosed in Patent Documents 1 and 2 offer advantages of enabling moisture content of an object for drying to be determined both on a real-time basis and quantitatively. However, since the object for drying is irradiated directly with near infrared rays, absorption spectra associated with components contained in the object for drying ends up overlapping with the absorption spectrum attributable to moisture, thereby resulting in the problem of impairing accurate measurement of moisture content in the object for drying. In addition, there is also a problem of difficulty in selecting a standard substance for calibrating an instrument for the same reason. Moreover, in the case of freeze-dried products frequently used in the fields of pharmaceuticals and foods in particular, there is susceptibility to effects caused by differences in a density of an object for drying, and since moisture contents of these products are also low, it has been indicated that there are problems that it is extremely difficult to accurately measure the moisture content therein.

Means for Solving the Problems

Therefore, as a result of conducting extensive studies to solve the problems described above, the inventors of the present invention surprisingly found that by measuring a near infrared absorption spectrum of moisture present around an object for drying such as inside a drying chamber or in a headspace (space above the object for drying in a container), instead of a near infrared spectrum based on moisture contained in the object for drying, the moisture content of the object for drying can be measured rapidly and in real-time without being subjected to the spectral effects of components contained in the object for drying, thereby leading to completion of the present invention.

Namely, the present invention relates to a method of measuring moisture content of an object for drying by measuring near infrared absorption of moisture present around the object for drying, and then measuring the moisture content of the object for drying based on an measured amount of near infrared absorption originating in the moisture, and to a process for producing a dried product obtained by drying an object for drying while using this measurement method.

Advantageous Effects of the Invention

According to the present invention, since only absorption of near infrared rays attributable to moisture present around an object for drying is measured, quantitative measurement of moisture content of the object for drying can be carried out in real-time easily, rapidly and in a non-destructive manner without being subjected to spectral effects attributable to components contained in the object for drying. In addition, instruments can be calibrated easily by measuring a saturated salt solution used as an instrument calibration standard.

Brief Description of Drawings

FIG. 1 shows the results of comparing HS-NIR obtained in the present invention and NIR spectrum of a cake;
FIG. 2 shows a graph representing the relationship between standard solutions and HS-NIR absorption thereof at 1912 nm, wherein the vertical axis in FIG. 2 represents values of absorbance in a near infrared absorption spectrum following second derivative processing (2nd derivative absorbance); and
FIG. 3 shows a graph representing the relationship between KF moisture values and HS-NIR absorbance.

Best Mode for Carrying Out the Invention

Although the following provides an explanation of embodiments of the present invention, it should be understood that the following embodiments are merely exemplary for explaining the present invention, and are not intended to limit the present invention to these embodiments alone. The present invention can be carried out in various forms without departing from the gist thereof.
The measurement method as claimed in the present invention is a method of measuring moisture content of an object for drying placed in a drying chamber or container, comprising the steps of measuring a near infrared absorption spectrum of moisture inside the drying chamber or in a headspace of the container to obtain a measured amount originating in the moisture, and calculating the moisture content of the object for drying based on a predetermined relationship between the measured amount and an amount of moisture. The present invention can be used regardless of the type of drying means in a step for obtaining a dried product such as a pharmaceutical preparation or food by drying an object for drying in a drying chamber or in a headspace of a container. Examples of drying means in this case include freeze-drying, fluidized bed drying and shelf drying. A preferable drying means is freeze-drying in the measurement method as claimed in the present invention.
Here, the term "drying chamber" as used in the present invention refers to entire space in which an object for drying is dried, and actually also refers to space in which the object for drying is dried (such as drying shelves) as well as space in which air is discharged (such as ducts). In addition, the present invention can also be used when measuring moisture content of an object for drying in a container, and can be used when, for example, measuring moisture content of an object for drying while drying in a container or measuring moisture content of an object for drying after having been dried in a container. In addition, the phase "headspace of a container" as used in the present invention refers to portion of a container that contains an object for drying in which the object for drying is not present. Consequently, a location where a near infrared absorption spectrum is measured may be a portion above an object for drying or a portion other than an upper portion of a container itself (such as a middle portion or lower portion).
There are no particular limitations on an object for drying able to be used in the present invention, and examples of an object for drying include freeze-dried preparations for injection, granules, powders, foods, cells and microbial samples. A particularly preferable example of an object for drying is a freeze-dried preparation for injection since it requires moisture content to be managed more precisely.
In the present invention, inside of a drying chamber or inside of a container for an object for drying is irradiated with near infrared rays, absorption attributable to water molecules in the light path thereof is measured, and moisture content of the object for drying is calculated based on a measured amount of that absorption. Here, the phase "measured amount" as used in the present invention refers to, for example, an amount of absorption in a near infrared spectrum (absorbance) or an absorption area in a near infrared spectrum. In addition, in the present invention, a near infrared spectrum used when determining a measured amount may be a near infrared absorption spectrum obtained directly by measuring, or a near infrared absorption spectrum following ordinary spectral processing such as second derivative processing or smoothing processing. Consequently, an amount of absorption (absorbance) or an absorption surface area and the like in a near infrared absorption spectrum following such spectral processing can also be used as a "measured amount" of the present invention. Furthermore, the phrase "near infrared rays" as used in the present invention refers to light rays in a wavelength range of 800 to 2500 nm. Absorption may be measured at any wavelength in this wavelength range provided the absorption is based on water molecules in that wavelength range. Although wavelengths of 1790 to 1960 nm are preferably wavelengths within this wavelength range, wavelengths of 730 to 790 nm or 1330 to 1460 nm can also be used.

There are no particular limitations on generation source of near infrared rays used in the present invention, and examples include a tungsten-halogen lamp, nichrome heater or light-emitting diode (InGaAs) and the like. In addition, there are also no particular limitations on a near infrared ray detector, and examples include InGaAs and Ge and the like, with those capable of a preferable wavelength range with good sensitivity being preferable. There are no particular limitations on a location where absorption of near infrared rays is measured, provided it is a location having relative humidity (or water vapor density) that correlates with moisture content of an object for drying. Thus, absorption of near infrared rays may be measured immediately above an object for drying, or in the vicinity of a duct of a drying chamber, for example, located at a distance from an object for drying, and any locations can be used for a location for measuring absorption of near infrared rays provided that a location correlates with the moisture in the object for drying. In addition, absorption of near infrared rays in a headspace of a container, for example, is measured when drying an object for drying in the state of being contained in a vial or other container.

Next, in the measurement method as claimed in the present invention, moisture content of an object for drying is calculated based on a predetermined relationship between a measured amount originating in moisture and an amount of moisture. The following provides an explanation of that predetermined relationship.

(Preparation of Calibration Curve)

When calculating moisture content of an object for drying using the present invention, a calibration curve is first prepared using a sample having known moisture content. Examples of methods for preparing a calibration curve, include, but are not limited to, the methods described below:

(1) several water standard samples having different moisture content are first used to measure near infrared absorption attributable to moisture around the samples;
(2) moisture content of the samples (KF values) is measured according to the Karl Fischer method; and
(3) a numerical correlation is determined between near infrared absorption and the KF values of the samples.
The method used to measure moisture content when preparing a calibration curve in this manner is not limited to the Karl Fischer method as described in (2) above, but rather any known method can be used, an example of which is measuring an amount of weight loss on drying.

(Calibration Curve Using Adsorption Isotherms)

In addition, generally in the case of freeze-dried preparations, an adsorption isotherm formula such as that of the BET method can be applied to a relationship between relative humidity (or water vapor density) in a headspace of a vial or inside a drying chamber and moisture content of a freeze-dried product. In addition, since there is a linear relationship between relative humidity and near infrared (which may be abbreviated simply as "NIR") absorption, absorption data of a near infrared spectrum of a headspace (which may be abbreviated as "HS-NIR") can be applied directly to, for example, the BET method instead of relative humidity. Thus, if this formula is used to preliminarily prepare a calibration curve that represents a relationship between NIR absorption and moisture content of a freeze-dried product, moisture content of a freeze-dried product can be calculated by measuring a near infrared absorption spectrum of humidity in an upper portion of a vial. In addition, the same calibration curve can be used provided there are no changes in the temperature and pressure conditions at the time of measuring the moisture content of the freeze-dried product.

In addition, in the measurement method as claimed in the present invention, instruments can be calibrated easily by using a saturated salt solution as an instrument calibration standard.

(Instrument Calibration Procedure)

In the case of measuring moisture content of an object for drying by using a calibration curve representing a relationship between relative humidity in a drying chamber and moisture content of a freeze-dried product, obtained using adsorption isotherms, near infrared absorbance can be calibrated prior to measurement by using a saturated salt solution such as LiCl, $MgCl_2$, $Mg(NO_3)_2$ or NaCl and the like as a standard. In other words, since a headspace of each saturated solution has a unique relative humidity (or water vapor density), the measurement thereof makes it possible to calibration an instrument by determining a relationship with absorbance (a calibration curve).

Although the following provides a more detailed explanation of the present invention through the examples indicated below, it should be understood that these examples are merely exemplary of the present invention, and are not intended to limit the present invention to the specific examples indicated below. The present invention can be carried by a person with ordinary skill in the art by making various modifications to the examples indicated below, and such modifications are included within the scope of the present invention.

Examples

Various tests as indicated below were carried out in the present invention. In the following tests, the Model 6500 and Sample Transport System (Nireco Corp.) were used for the NIR apparatus, while the Model CA-06 (Mitsubishi Chemical Corp.) was used to measure moisture content. In addition, the freeze-dried preparations used for measurement were prepared by dissolving drug substance, mannitol or meglumin and the like in water following by dispensing into a glass vial and freeze-drying the resulting solution, and finally distilling off the moisture under reduced pressure and restoring the pressure with nitrogen to prepare a freeze-dried preparation. Measurement was carried out by allowing near infrared rays to permeate the headspace of a vial containing the freeze-dried preparation allowed to stand undisturbed in a sample transport system. In addition, measurements were carried out at room temperature.

(1) Comparison of Headspace NIR and Ordinary NIR Spectra

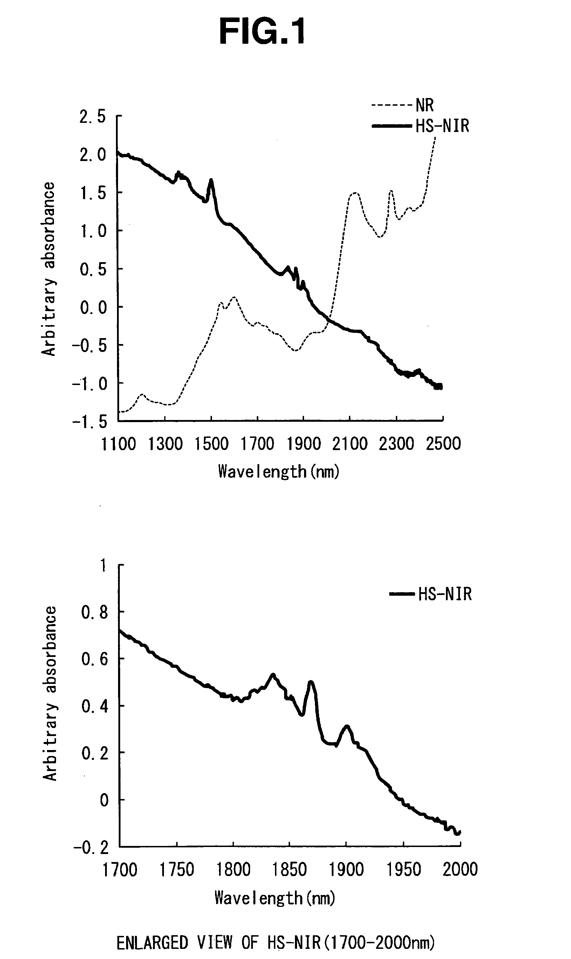

The HS-NIR of a freeze-dried preparation and the NIR of an object for drying (cake) were measured followed by a comparison of the near infrared spectra. FIG. 1 shows the results of that comparison. Although there is drift in the baseline, since the change in the HS-NIR spectrum shown in FIG. 1 is nearly linear, the peaks originating in water are clearly distinguished, and peaks confirmed in the vicinity of 1330 to 1460 nm and 1790 to 1960 nm were all determined to originate in water. On the other hand, in the NIR of the cake, those peaks originating in water from 1900 to 1950 nm were broad and overlapped with other peaks, while a peak thought to be appearing in the vicinity of 1400 nm was unable to be confirmed as to the effects of other components.

This suggests that that the measurement method as claimed in the present invention is particularly superior when measuring moisture contents of the object for drying having low moisture content. In the following study, second derivative processing was carried out on peaks attributable to water obtained by HS-NIR, and values obtained from absorption at 1912 nm, considered to yield the best sensitivity, were used.

(2) Preparation of Relative Humidity Standard Solutions

Saturated solutions of each of the salts shown in Table 1 were placed in a glass vial and sealed with a rubber stopper followed by measuring the HS-NIR for samples stored at 25°C. Furthermore, the relative humidity of phosphorous pentaoxide ($P_2O_5$) was assigned a value of 0% and used as a blank.

[Table 1]

Relative Humidity Standard Solutions

| Saturated Solution | Relative Humidity |
| --- | --- |
| $P_2O_5$ | 0% |
| LiCl | 12% |
| $MgCl_2$ | 33% |
| $Mg(NO_3)_2$ | 52% |
| NaCl | 75% |
| Note: $P_2O_5$ was used in the form of a solid. | |

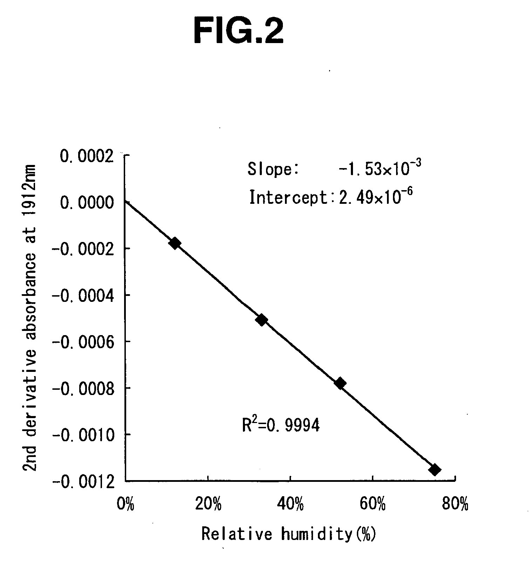

The relationship between the standard solutions and HS-NIR absorption at 1912 nm is shown in FIG. 2. It was confirmed from FIG. 2 that the relationship between headspace moisture (relative humidity) and HS-NIR demonstrates good linearity, and that the curve passes through zero. This indicates that measurement of moisture by HS-NIR can be carried out quantitatively, and that the dried state of the object can be determined directly using HS-NIR absorbance.

In addition, this also indicates that instruments can be calibrated using standard solutions.

(3) Adsorption Isotherms

A BET formula (1) was prepared by assuming a first layer adsorption using HS-NIR absorbance data instead of relative humidity.
[Formula 1]

$$V_{1st} = \frac{Vmcx\{1-(n+1)x^n + nx^{n+1}\}}{(1-x)\{1+(c-1)x-cx^{n+1}\}} \quad [1]$$

wherein, n = 1, Vm represents the moisture value during first layer adsorption and saturation, c represents a constant, x represents relative humidity obtained from HS-NIR absorbance x 1/100, and $V_{1st}$ represents the moisture value of the preparation.

(4) Preparation of Calibration Curve

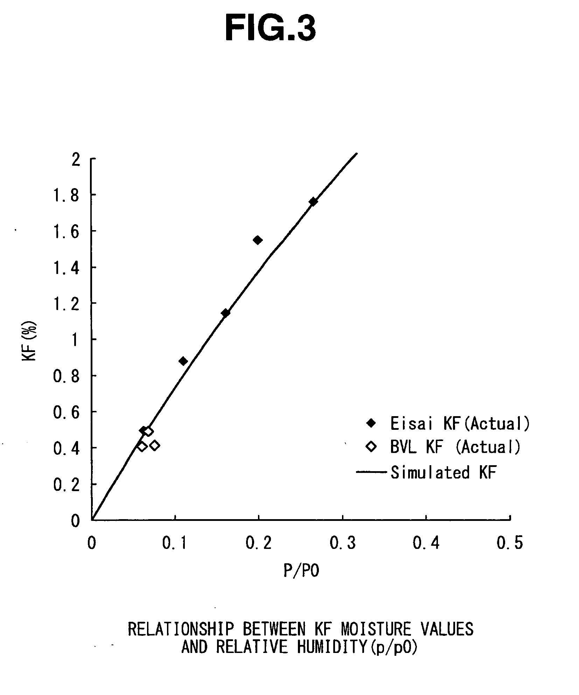

Five standards of freeze-dried preparations sealed in vials and having different moisture contents (for calibration curve preparation) were prepared, and the HS-NIR of these samples was measured (see Eisai KF (Actual)). After obtaining absorbance values (x), moisture values ($V_{1st}$) were determined by a method such as the Karl Fischer method, these values were substituted into the adsorption isotherm [1] obtained in (3), the values of Vm and c were calculated by curve-fitting using commercially available spreadsheet software and the like, and a theoretical curve representing the relationship between relative humidity (partial pressure: P/P0) and moisture content of the freeze-dried preparations was prepared for use as a calibration curve. FIG. 3 shows the calibration curve obtained in this manner (see Simulated KF curve in FIG. 3).

(5) Sample Measurement

Three lots of preparations produced separately from the preparations for calibration curve preparation (validation preparations) were measured for HS-NIR (see BVL KF (Actual)), and moisture contents were calculated from the calibration curve obtained in (4) followed by a comparison of measured KF values. Those results are shown in Table 2.
[Table 2]

Comparison of KF Values and Moisture Values Determined by HS-NIR

| KF Moisture Value | HS-NIR | Difference |
|---|---|---|
| 0.41 % | 0.45% | 0.04% |
| 0.41 % | 0.56% | 0.15% |
| 0.49% | 0.50% | 0.01% |

On the basis of these results, KF values and moisture values obtained from HS-NIR demonstrated good consistency, and moisture contents of freeze-dried preparations having extremely low moisture contents of less than 1.0%, for which measurement of moisture content is difficult using conventional methods, were demonstrated to be able to be measured accurately by using the measurement method as claimed in the present invention. Furthermore, although moisture of the object for drying was quantitatively determined by using standard solutions to determine relative humidity followed by preparing adsorption isotherms on the basis thereof in the present embodiment, drying status of the object for drying can also be determined easily by using values of HS-NIR absorbance directly.

Industrial Applicability

According to the present invention, since only absorption of near infrared rays attributable to moisture present around an object for drying is measured, moisture content of an object for drying can be quantitatively measured easily, rapidly and in real-time and in a non-destructive manner without being subjected to spectral effects of components contained in an object for drying.

**Claims**

1. A method of measuring moisture content of an object for drying in a drying chamber, comprising the steps of:

   measuring a near infrared absorption spectrum of moisture present in the drying chamber to obtain a measured amount originating in water; and
   calculating the moisture content of the object for drying based on a predetermined relationship between the measured amount and the moisture content.

2. The method according to claim 1, wherein the predetermined relationship is selected from the group consisting of a calibration curve of the measured amount and moisture, a relationship between the measured amount and relative humidity, and a relationship between the measured amount and an adsorption isotherm.

3. The method according to claim 1 or 2, wherein the measured amount is an absorbance of the near infrared absorption spectrum of moisture, or an area of the near infrared absorption spectrum of moisture.

4. A method of measuring moisture content of an object for drying in a container, comprising the steps of:

   measuring a near infrared absorption spectrum of moisture in a headspace of the container to obtain a measured amount originating in moisture; and
   calculating the moisture content of the object for drying based on a predetermined relationship between the measured amount and the moisture content.

5. The method according to claim 1, wherein the predetermined relationship is selected from the group consisting of a calibration curve of the measured amount and moisture, a relationship between the measured amount and relative humidity, and a relationship between the measured amount and an adsorption isotherm.

6. The method according to claim 1 or 2, wherein the measured amount is an absorbance of the near infrared absorption spectrum of moisture or a surface area of the near infrared absorption spectrum of moisture.

7. The method according to any of claims 1 to 6, wherein the object for drying is a freeze-dried preparation.

8. A process for producing a dried product obtained by drying the object for drying while measuring moisture content using the method according to any of claims 1 to 7.

# FIG.1

ENLARGED VIEW OF HS-NIR (1700-2000nm)

# FIG.2

Slope: $-1.53 \times 10^{-3}$

Intercept: $2.49 \times 10^{-6}$

$R^2 = 0.9994$

2nd derivative absorbance at 1912nm

Relative humidity(%)

# FIG.3

RELATIONSHIP BETWEEN KF MOISTURE VALUES
AND RELATIVE HUMIDITY(p/p0)

<div align="center">

**INTERNATIONAL SEARCH REPORT**

</div>

| | International application No. |
|---|---|
| | PCT/JP2006/323698 |

| A. CLASSIFICATION OF SUBJECT MATTER |
|---|
| *G01N21/35*(2006.01)i, *F26B5/06*(2006.01)i, *F26B25/00*(2006.01)i |
| According to International Patent Classification (IPC) or to both national classification and IPC |

| B. FIELDS SEARCHED |
|---|
| Minimum documentation searched (classification system followed by classification symbols) |
| G01N21/00-G01N21/61, F26B25/00 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JST7580(JDream2), JSTPlus(JDream2)

| C. DOCUMENTS CONSIDERED TO BE RELEVANT | | |
|---|---|---|
| Category* | Citation of document, with indication, where appropriate, of the relevant passages | Relevant to claim No. |
| X | JP 3-279846 A (Okawara Mfg. Co., Ltd.), 11 December, 19991 (11.09.91), Page 2, upper left column; page 3, upper right column; page 4, upper right column; Fig. 1 | 1-3,5-6,8 |
| Y | A. Bardat, et al.,"Moisture Measurement: A New Method for Monitoring Freeze-drying cycles", Journal of Parenteral Science & Technology, Vol.47, No.6, 1993, pp.293-299 | 4,7 |
| Y | JP 62-118241 A (Shimadzu Corp.), 29 May, 1987 (29.05.87), Page 1, lower right column to page 2, upper left column; Fig. 4 | 4,7 |

| ☒ Further documents are listed in the continuation of Box C. | ☒ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 December, 2006 (22.12.06) | 09 January, 2007 (09.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/323698

C (Continuation). DOCUMENTS CONSIDERED TO BE RELEVANT

| Category* | Citation of document, with indication, where appropriate, of the relevant passages | Relevant to claim No. |
|---|---|---|
| A | J. Henningsen, "Measurement of free SO2 in wine with 7.4-μm difference frequency spectrometer", Appiled Physics B, Vol.76, No.4, 2003, pp.451-456 | 4 |
| A | JP 4-110641 A (Shionogi & Co., Ltd.), 13 April, 1992 (13.04.92), Page 5, upper right column; Fig. 8 | 4 |
| A | JP 2002-184767 A (L'air Liquid, S.A. à Directoire et Conseil de Surveillance pour l'Etude et l'Exploitation des Procédés Georges Claude), 28 June, 2002 (28.06.02), Claims; Fig. 1 | 4 |

Form PCT/ISA/210 (continuation of second sheet) (April 2005)

INTERNATIONAL SEARCH REPORT
Information on patent family members

International application No.

PCT/JP2006/323698

| | | | |
|---|---|---|---|
| JP 3-279846 A | 1991.12.11 | JP 2932081 B2 | 1999.08.09 |
| JP 62-118241 A | 1987.05.29 | (Family: none) | |
| JP 4-110641 A | 1992.04.13 | (Family: none) | |
| JP 2002-184767 A | 2002.06.28 | CN 1345081 A | 2002.04.17 |
| | | EP 1195450 A2 | 2002.04.10 |
| | | EP 1195450 A3 | 2002.06.12 |
| | | KR 20020026857 A | 2002.04.12 |
| | | TW 512412 B | 2002.12.01 |
| | | US 6442736 B1 | 2002.08.27 |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10311792 B

- JP H11326195 B